# DEMANDE DE BREVET EUROPEEN

(11) **EP 2 306 383 A1**
(43) Date de publication de la demande: **06.04.2011**
(21) Numéro de dépôt: 10172804.6
(22) Date de dépôt: 13.08.2010
(51) Int. Cl.: G06Q 10/00

(54) **Système d'aide à la conduite de session de brainstorming**

(30) Priorité: 22.09.2009 FR 0956497
(71) Demandeur: Alcatel Lucent, 75007 Paris (FR)
(72) Inventeur: Delegue, Gérard, 91620, Nozay (FR); Poussiere, Fabrice, 91620, Nozay (FR)
(74) Mandataire: Chaffraix, Sylvain

(57) **Abrégé**

Système d'aide à la conduite d'une session de brainstorming entre une pluralité de participants connectés au moyen de terminaux à un réseau de communication, possédant une interface pour recevoir les données transmises par ces terminaux en liaison avec la session et pour émettre d'autres données vers les terminaux, et des moyens de traitement pour conduire la session.

Le système se **caractérise en ce qu**'il dispose en outre d'une mémoire contenant des modèles définissant au moins un comportement des moyens de traitement en réponse aux données, ces comportements comportant au moins le pilotage des modes de communication entre les terminaux par la transmission de messages de signalisation à un ou plusieurs éléments gestionnaires du réseau de communication, des moyens de paramétrages permettant de sélectionner un modèle choisi parmi les modèles contenus dans la mémoire.

## Description

La présente invention concerne un système automatisé d'aide à la conduite d'une session de brainstorming entre une pluralité de participants utilisant des terminaux connectés les uns aux autres par un réseau de communication.

Le « Brainstorming », parfois appelé « remue-méninge » en français, est une technique de résolution créative de problèmes sous la direction d'un animateur. Inventé dans les années 1930 par Alex Osborn, elle rassemble aujourd'hui de nombreuses variantes utilisant divers médias : images, mots, dessins...

Elle permet de résoudre des problèmes de façon originale ou de débloquer des situations apparemment sans issue, dans des domaines très différents : recherche de solutions marketing, résolution d'un problème technique, recherche de nouveaux produits etc.

La technique du brainstorming doit suivre une méthodologie rigoureuse et nécessite la présence d'un animateur expérimenté. Même au sein d'une entreprise, il n'est pas aisé de pouvoir disposer d'une telle compétence.

Elle nécessite également de pouvoir réunir les participants en un même lieu. A ce titre, elle s'avère mal adaptée aux entreprises qui sont de plus en plus globales.

Elle nécessite aussi une prise de parole en public de la part des participants qui peut s'avérer un frein pour certains. En outre, notamment par le manque d'anonymat, les participants peuvent s'autocensurer et ne proposer que des idées « raisonnables ». Les possibilités les plus créatives du brainstorming sont ainsi sous exploitées.

Enfin, seul un petit groupe peut être géré par un animateur, limitant d'autant les possibilités créatrices. Outre l'animation, il s'agit en effet de noter, d'ordonner, de classifier les idées, et à la fin de le sélectionner et de générer un rapport. La gestion « manuelle » de ces étapes ne peut se faire qu'avec un nombre réduit d'idées émises.

Du fait de ces difficultés de déploiement, bien que permettant la génération de résultats intéressants, la méthodologie du brainstorming est relativement peu employée.

Des tentatives commencent à apparaître d'automatisation de certains des aspects du brainstorming.

Il est ainsi possible d'utiliser les réseaux de communication et les outils informatiques pour gérer certains aspects comme l'invitation par e-mail, la communication par conférences téléphoniques ou vidéos, des outils de messagerie instantanée... mais tout cela ne couvre qu'une partie des besoins.

Il demeure indispensable de disposer d'un animateur qualifié et les difficultés de gérer un grand nombre de participants et d'idées demeurent les mêmes.

La demande de brevet américain US2002/0029167 propose un mécanisme basé sur un réseau de communication pour aider à la conduite de sessions de brainstorming.

Toutefois, le système décrit dispose de moyens de communication statiques, qui ne s'adaptent pas à la charge et au volume de données traité. Ainsi, la gestion d'un grand nombre d'idées générés par les participants n'est pas prévue.

La présente invention a pour but de résoudre ces inconvénients en proposant un système qui interagisse avec le réseau de communication afin de gérer le volume des données à traiter de façon optimale.

Pour ce faire, l'invention a pour premier objet un système d'aide à la conduite d'une session de brainstorming entre une pluralité de participants connectés au moyen de terminaux à un réseau de communication. Le système possède
- une interface pour recevoir les données transmises par ces terminaux en liaison avec la session et pour émettre d'autres données vers les terminaux, et
- des moyens de traitement pour conduire la session.

Le système se **caractérise en ce qu**'il dispose en outre
- d'une mémoire contenant des modèles définissant au moins un comportement des moyens de traitement en réponse aux données, ces comportements comportant au moins le pilotage des modes de communication entre les terminaux par la transmission de messages de signalisation à un ou plusieurs éléments gestionnaires du réseau de communication, et
- des moyens de paramétrages permettant de sélectionner un modèle choisi parmi les modèles contenus dans la mémoire.

Selon un mode de réalisation de l'invention, le pilotage des modes de communication comprend la création et la gestion de groupes de communication au sein de l'ensemble des terminaux.

Le pilotage des modes de communication peut comprendre la sélection d'un média parmi un groupe composé de : audio ou vidéo conférence; affichage textuel instantané (« chat »); échanges de petits documents textuels ou graphiques.

Les comportements peuvent en outre comporter l'interaction avec des moyens d'évaluation aptes à analyser les données reçus des terminaux afin de déterminer un statut de la session.

Le système peut par ailleurs comporter des moyens de génération pour produire des idées en fonction du statut de la session et des données reçus des terminaux, et l'interface est prévue pour transmettre ces idées aux terminaux.

Ces moyens de génération peuvent être aptes à fournir des éléments visuels à partir du contenu sémantique des données reçus des terminaux.

Les modèles peuvent comporter plusieurs phases, chacune pouvant définir un comportement distinct.

Les moyens de traitement peuvent être prévus pour changer de phase en fonction du statut de la session.

Le système peut également comporter une autre interface pour permettre l'ajout de nouveaux modèles au sein de la mémoire.

L'invention a également pour objet un procédé d'aide à la conduite d'une session de brainstorming entre une pluralité de participants connectés au moyen de terminaux à un réseau de communication. Ce procédé consiste à recevoir des données transmises par les terminaux en liaison avec la session, à traiter les données pour conduire la session et à émettre d'autres données (s) vers les terminaux.

Le procédé se **caractérise en ce qu**'il consiste en outre à
- sélectionner un modèle choisi parmi un ensemble de modèles disponibles au sein d'une mémoire ;
- utiliser un comportement défini par le modèle choisi pour traiter les données, le comportement comportant au moins une étape de pilotage des modes de communication entre les terminaux par la transmission de messages de signalisation à un ou plusieurs éléments gestionnaires du réseau de communication.

L'invention a aussi pour objet un programme d'ordinateur disposant de moyens mettant en oeuvre un tel procédé.

L'invention a pour autre objet un serveur de communication disposant des moyens matériels et logiciels pour mettre en oeuvre un système d'aide à la conduite d'une session de brainstorming tel que précédemment décrit.

L'invention et ses avantages apparaîtront de façon plus claire dans la description qui va suivre en liaison avec les figures annexées.
La figure 1 schématise un réseau de communication dans lequel
La figure 2 représente une architecture fonctionnelle possible du système selon l'invention.
Les figures 3a et 3b illustrent deux comportements différents des moyens de traitement du système selon l'invention.

Le système S d'aide à la conduite d'une session de brainstorming selon l'invention est connecté à une pluralité de terminaux de communication T1, T2, T3 au moyen d'un réseau de communication N.

Ces terminaux peuvent être des ordinateurs, des téléphones fixes ou mobiles, des assistants numériques personnels, ou n'importe quel autre dispositif permettant à un participant d'interagir avec le système S.

Le système S peut être mis en oeuvre sur un ou plusieurs serveurs de données. Il peut disposer, fonctionnellement, de deux interfaces. Une première interface INT lui permet d'échanger des données avec les terminaux T1, T2, T3. Une deuxième interface INTN lui permet d'échanger des messages de signalisation sig avec un ou plusieurs éléments gestionnaires G du réseau de communication.

Ce ou ces éléments gestionnaires de réseau G sont des éléments fonctionnels permettant de modifier le comportement du réseau et de le paramétrer. Il s'agit par exemple d'un serveur de signalisation qui dispose des moyens pour définir et gérer des groupes de conférences au sein du réseau, de gérer les appels et session en cours etc.

Une architecture IMS (IP Multimedia Subsystem) telle que définie par les organismes de standardisation TISPAN ou 3GPP permet de gérer ces aspects de télécommunication (gestion d'appels, gestion des groupes de conférences etc.)

Le système S dispose de moyens de traitement TRT pour conduire une session de brainstorming entre les participants, ainsi que d'une mémoire MEM contenant des modèles. Ces modèles sont des structures de données qui définissent au moins le comportement des moyens de traitement TRT. Ce comportement comprend au moins le pilotage des modes de communication entre les terminaux T1, T2, T3 des participants à la session, par la transmission de messages de signalisation sig à ou aux éléments gestionnaires G.

Enfin, le système S dispose de moyens de paramétrage permettant de sélectionner un modèle choisi parmi lesdits modèles.

Ces messages de signalisation peuvent notamment être conformes au protocole SIP tel que défini par le RFC 3261 intitulé « Session Initiation Protocol ».

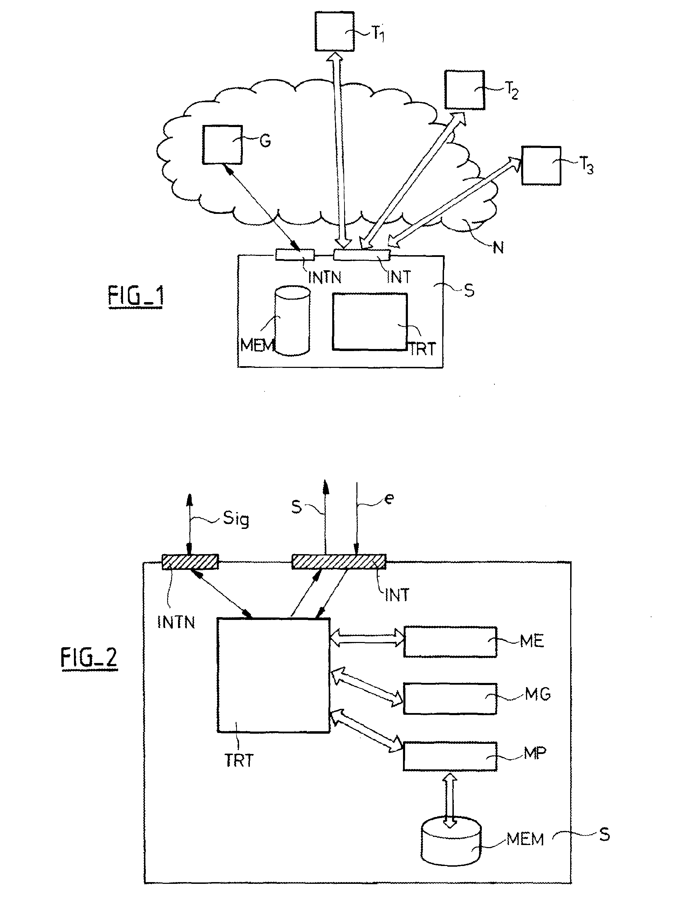

La figure 2 représente une architecture fonctionnelle très simplifiée du système S. On y retrouve les interfaces INT, INTN, les moyens de traitement TRT et la mémoire MEM, précédemment commentés. Également, un élément gestionnaire G a été représenté par facilité, bien qu'il soit extérieur au système S. Dans la pratique, le système S et l'élément gestionnaire G sont toutefois susceptibles d'être mis en oeuvre sur le même serveur ou sur le même groupe de serveurs.

Dans un premier temps, un modèle choisi doit être sélectionné parmi l'ensemble des modèles disponibles au sein de la mémoire MEM. Cette sélection peut être effectuée par un participant responsable, et être partiellement guidé par les moyens de paramétrage MP.

Par exemple, un ensemble de questions peut être posé au participant responsable et les réponses fournies peuvent permettre de sélectionner un modèle correspondant. Ces questions peuvent porter sur le type de brainstorming souhaité, c'est-à-dire les méthodes utilisées pour poser le problème, pour générer de nouvelles idées ou pour filtrer les propositions, l'explication ou non des méthodologies mises en oeuvre, la durée maximale pour chaque phase de la session de créativité, la quantité d'idées minimum à générer par participants etc.

Le participant responsable peut également choisir, sans guide, le modèle souhaité et, si le souhaite, modifier certains de ses paramètres.

L'ensemble des modèles disponibles est évolutif. Le système S peut prévoir une interface pour permettre l'ajout de nouveaux modèles correspondant à d'autres schémas de brainstorming.

Les modèles définissent un ou plusieurs comportements des moyens de traitement. Un même modèle peut en effet comporter plusieurs phases. Ces phases peuvent être chronologiques et change au fur et à mesure de l'avancement de la session de brainstorming.

Typiquement, une session de brainstorming comporte des étapes de
- définition du problème à résoudre,
- collecte d'idées
- génération d'idées par suggestion automatique ou manuelle,
- catégorisation des idées
- évaluation des idées.

À l'issue de cette dernière étape, la session peut se terminer ou reboucler sur une nouvelle étape de collecte ou de génération d'idées.

Ces étapes peuvent correspondre à des phases distinctes qui, chacune, dicte un comportement différent des moyens de traitement TRT.

En fonction du modèle choisi, les moyens de traitement TRT traitent les données 'e' reçu à travers l'interface INT en fonction d'un comportement défini par ce modèle choisi. Ils fournissent des données de sortie 's' qui peuvent être transmis à certains ou tous les terminaux partis à la session de brainstorming.

Ce comportement définit lui-même notamment le pilotage des modes de communication entre les terminaux.

Ce mode de communication comprend la création de groupes de communication au sein de l'ensemble des terminaux. Par la transmission de messages de signalisation s aux éléments gestionnaires du réseau, les moyens de traitement TRT peuvent ainsi répartir la session de brainstorming en plusieurs sous-sessions. Le nombre et l'objectif de ces sous-sessions peut être fonction du modèle choisi et du nombre de participants.

Le pilotage du mode de communication comprend aussi la sélection d'un média : audio ou vidéo conférence, affichage textuel instantané (ou « chat » en anglais), échanges de petits documents textuels ou graphiques (de type « post-it » par exemple), etc.

Cette sélection peut elle-aussi être fonction du comportement défini par le modèle choisi, ainsi éventuellement que du nombre de participants.

Ce pilotage est dépendant du comportement et donc il peut y avoir autant de pilotages différents que de phases contenus dans le modèle choisi. Autrement dit, le mode de communication peut être différent pendant une phase de définition du problème et dans une phase de collecte d'idée, par exemple.

La phase de collecte d'idées consiste à solliciter les participants à la session de brainstorming pour qu'ils transmettent des idées vers le système S. Ces idées peuvent être retransmises vers les autres participants. Ainsi, chaque participant peut réagir aux idées des autres pour imaginer des idées nouvelles. Le principe même du brainstorming repose sur cette génération itérative d'idées.

L'ensemble des idées est collecté par le système S et pourra être transmis aux moyens d'évaluation qui sera ultérieurement décrit.

Il peut être prévu que les soumissions d'idées soient rendus anonymes par le système S. En effet, le fait d'être anonyme peut aider certains participants à fournir leurs idées plus librement et avec moins d'autocensure.

Également, il peut être prévu des moyens de traduction afin de permettre des sessions de brainstorming entre participants utilisant des langues différentes. Les données reçues 'e' sont alors traduites pour fournir des données transmises 's'.

Une autre fonctionnalité possible est de rattacher les idées émises à leur émetteur. Il peut en effet être intéressant de pouvoir connaître, en toute fin de processus, la ou les paternités de la solution finale et de certaines idées particulièrement intéressante. Un autre intérêt est de faciliter l'enrichissement des idées par d'autres participants en constituant des sous-groupes et en soumettant des idées ne venant par des participants à ce sous-groupe.

Le système S peut gérer cet historique afin de permettre aisément ce suivi.

Il peut être également prévu de diviser les participants en sous-sessions de brainstorming (ou « groupe »), ainsi qu'il a été évoqué précédemment. Cette fonctionnalité permet de pouvoir gérer un grand nombre de participants, tout en évitant les problèmes inhérents à de trop grands groupes.

En effet, un nombre de participants trop grands tend à générer plusieurs problèmes :
- certains participants se sentent peu concernés et peu responsables du bon déroulement de la session de brainstorming.
- Un trop grand nombre d'idées peut être généré. Même si celles-ci peuvent être traitées par le système S, elles peuvent être trop nombreuses pour être assimilés par les participants et leur permettre de rebondir en élaborant de nouvelles idées. Un trop grand nombre d'informations à produire sur les terminaux des participants nuit également à leur lisibilité.

Par contre, il y est a priori intéressant d'augmenter le nombre de participants autant que possible, puisque cela permet de bénéficier de la créativité d'un plus grand nombre de cerveaux.

La division en sous-sessions permet de résoudre cette contradiction en tirant profit des avantages des petits groupes et de la créativité d'un grand nombre de participants.

Il peut en outre être prévu de lier les sous-sessions à la problématique des langues. De façon automatique et paramétrable, le système S peut déterminer la langue de préférence de chaque participant afin de déterminer les sous-sessions sur cette base.

Il peut au contraire être prévu de mixer des participants de langues et cultures différentes afin de générer des idées qui ne sont pas liées à la culture locale.

Les idées générées par chaque sous-session peuvent ensuite être partagées par l'ensemble des participants à la session de brainstorming. Chaque sous-session peut avoir à choisir un nombre limité d'idées qui seront présentées à la session d'ensemble. Alternativement ce choix peut être effectué automatiquement par les moyens d'évaluation ME qui vont maintenant être décrits.

Le système dispose donc en outre de moyens d'évaluation ME. Ils sont prévus pour analyser les données reçus 'e', notamment pendant la phase de collecte d'idées, afin d'en tirer un statut de la session. Le comportement définit par le modèle choisi peut spécifier l'interaction des moyens de traitement TRT et des moyens d'évaluation ME, c'est-à-dire à quel moment et dans quels conditions, il doit être fait appel à ces derniers.

Ces moyens d'évaluation ME peuvent mettre en oeuvre différents mécanismes, simples ou complexes. Leur but est d'évaluer la qualité des données reçus des terminaux.

Ils peuvent notamment évaluer la qualité sémantique des idées soumises par les participants à la session durant la phase de collecte d'idées. Ils peuvent à ces fins mettre en oeuvre des mécanismes complexes d'intelligence artificielle. Dans un tel cas, l'évaluation des idées peut être automatique. Au fur et à mesure de la soumission des idées, les moyens d'évaluation peuvent être mis en oeuvre et déterminer un statut.

Ils peuvent également faire appel à une interaction avec les participants. Une phase de la session, appelée phase d'évaluation, peut consister à faire voter les participants sur la pertinence des idées émises.

Quelque soit la mis en oeuvre, cette évaluation peut être effectuée selon 2 critères : la faisabilité et la créativité. Il faut en effet que l'idée soit réalisable en pratique et constitue donc bien une solution concrète au problème posé. Et il faut qu'elle soit également créative et non une évolution directe des solutions de l'état de l'art. Les idées ne répondant pas à ces critères peuvent être écartées.

Les moyens d'évaluation peuvent générer un statut de la session en fonction de cette évaluation. Ce statut est une représentation de cette évaluation.

En fonction de ce statut, des actions peuvent être déclenchées par les moyens de traitement TRT.

Cette action peut être un changement de phase de la session. Par exemple, si les moyens d'évaluation déterminent qu'un trop grand nombre d'idées de qualité ont été émise, ils peuvent déclencher une phase de classement des idées et/ou de re-discussion des idées en sous-groupe.

Si le statut indique au contraire qu'un trop petit nombre d'idées de qualité a été émis, une phase de génération d'idées peut être déclenchée.

Si le statut indique un faible nombre d'idées de bonne qualité, il peut aussi être décidé de la fin de la session de brainstorming.

Cette détermination peut être basée également sur des considérations temporelles. En fonction de la durée prévue pour la session de brainstorming (qui peut être fixé dans le modèle choisi et/ou paramétré par les moyens de paramétrage MP), l'action déclenchée par les moyens de traitement TRT peut être différente. Ceux-ci se basent donc à la fois sur le statut et sur le critère temps pour déterminer l'action à déclencher.

Par exemple, en cas d'insuffisance des idées émises, il peut être décidé
- soit de terminer la session si l'on est arrivé au bout du temps imparti,
- soit de relancer une nouvelle phase de collecte d'idées, s'il reste relativement peu de temps avant la fin du temps imparti;
- soit de lancer une phase de génération d'idées puis une phase de collecte d'idées si la fin du temps imparti est plus lointaine.

Comme il a été déjà évoqué, le système S d'aide à la conduite d'une session de brainstorming peut comporter des moyens de génération MG pour produire des idées.

L'étape de génération d'idées peut être déclenchée systématiquement si elle est prévue dans le modèle choisi. Alternativement, le modèle choisi peut ne prévoir son déclenchement qu'à la suite d'une phase d'évaluation et en fonction du statut de la session de brainstorming.

Ces idées ne sont donc pas directement issues des participants mais peuvent être générées à partir des données qu'ils fournissent.

Ces nouvelles idées peuvent être générées en mettant en correspondance plusieurs idées soumises et en recherchant des concepts qui les englobent, ou des idées appartenant à un même concept global. Par exemple, à partir des idées soumises « rouge » et « verte », les moyens de génération MG peuvent générer une idée plus générale « couleur » ou d'autres idées appartenant à ce même concept : « jaune », « orange » etc.

Elles peuvent être générées aussi à partir du problème posé. Son analyse sémantique peut faire ressortir un ou plusieurs mots-clés qui peuvent également donner lieu à une recherche d'un concept général et d'autres mots-clés correspondant à ce concept général.

Par exemple, si le problème posé mentionne une localisation, les moyens de génération pourront fournir différentes localisations possibles : « montagne », « plage », « immeuble », « usine », « train »...

Pour ce faire, les moyens de génération peuvent disposer d'une base de données de mots-clés.

Ces nouvelles idées peuvent être fournies aux participants (soit à tous les participants de la session de brainstorming, soit à ceux d'une sous-session) et peuvent les aider à développer eux-mêmes de nouvelles idées et à les soumettre au système S.

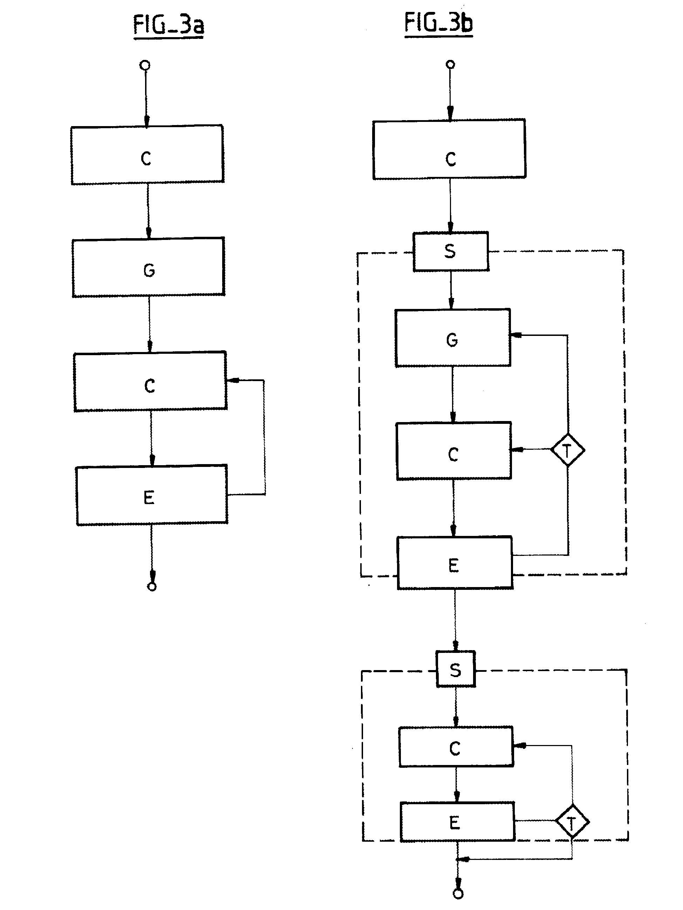

Les figures 3a et 3b illustrent deux organigrammes différents illustrant des fonctionnements possibles des moyens de traitement TRT, tels qu'ils peuvent être définis par les modèles.

Le fonctionnement illustré par la figure 3a est relativement simple. Il enchaîne une phase de collecte C, puis une phase de génération G (sur la base des idées reçus pendant la première phase de collecte), puis une nouvelle phase de collecte C. Cette dernière phase tire profit des idées générées dans la phase précédente. Puis suit une phase d'évaluation E. En fonction du résultat de l'évaluation, les moyens de traitement provoquent un rebouclage vers la seconde phase de collecte ou stoppent la session de brainstorming.

Le fonctionnement illustré par la figure 3b est plus complexe.

Il enchaîne une première phase de collecte, puis une première phase de division en sous-sessions S.

Les étapes ultérieures concernées par cette division en sous-sessions sont schématisées par le cadre en pointillé. Elles comprennent une phase de génération G, puis une seconde phase de collecte C et une première phase d'évaluation E. Si le résultat de cette première évaluation est jugée insuffisant, le système reboucle. En fonction du temps imparti par le modèle pour cette première étape du comportement, le rebouclage peut se faire soit au niveau de la phase de génération, soit au niveau de la deuxième phase de collecte.

Si le résultat de la première évaluation est jugé suffisant, les moyens de traitement provoquent une seconde division S en sous-sessions. Ces sous-sessions peuvent être différentes des premières et l'étape consiste à faire discuter des participants sur les idées générés par d'autres participants.

Cette deuxième étape comprend une phase de collecte C et une phase d'évaluation. En fonction du résultat de celle-ci, la session de brainstorming se termine ou reboucle sur la phase de collecte.

D'autres fonctionnements peuvent être définis par les modèles mémorisés dans la mémoire MEM. L'administrateur d'une session de brainstorming peut choisir parmi ces modèles et les paramétrer en fonction du type de problème, du résultat choisi, des conditions de la session (durée souhaité...) etc.

## Revendications

1. Système (S) d'aide à la conduite d'une session de brainstorming entre une pluralité de participants connectés au moyen de terminaux (T1, T2, T3) à un réseau de communication (N), ledit système possédant une interface (INT) pour recevoir les données (e) transmises par lesdits terminaux en liaison avec ladite session et pour émettre d'autres données (s) vers lesdits terminaux, des moyens de traitement (TRT) pour conduire ladite session ; **caractérisé en ce qu'**il dispose en outre d'une mémoire (MEM) contenant des modèles définissant au moins un comportement desdits moyens de traitement (TRT) en réponse auxdites données, lesdits comportements comportant au moins le pilotage des modes de communication entre lesdits terminaux par la transmission de messages de signalisation (sig) à un ou plusieurs éléments gestionnaires (G) dudit réseau de communication (N), et des moyens de paramétrages permettant de sélectionner un modèle choisi parmi lesdits modèles.

2. Système selon la revendication 1, dans lequel ledit pilotage des modes de communication comprend la création et la gestion de groupes de communication au sein de l'ensemble desdits terminaux (T1, T2, T3).

3. Système selon l'une des revendications 1 ou 2, dans lequel ledit pilotage des modes de communication comprends la sélection d'un média parmi un groupe composé de : audio ou vidéo conférence; affichage textuel instantané (« chat »); échanges de petits documents textuels ou graphiques.

4. Système selon l'une des revendications précédentes, dans lesdits comportements comportent en outre l'interaction avec des moyens d'évaluation (ME) apte à analyser lesdites données (e) reçus desdits terminaux afin de déterminer un statut de ladite session.

5. Système selon la revendication précédente comportant des moyens de génération (MG) pour produire des idées en fonction du statut de ladite session et desdites données (e) reçus desdites terminaux, et dans lequel ladite interface (INT) est prévue pour transmettre lesdites idées auxdits terminaux.

6. Système selon la revendication précédente, dans lequel lesdits moyens de génération sont aptes à fournir des éléments visuels à partir du contenu sémantique desdites données (e) reçus desdits terminaux.

7. Système selon l'une des revendications précédentes, dans lequel lesdits modèles peuvent comporter plusieurs phases, chacune pouvant définir un comportement distinct.

8. Système selon la revendication 7 et l'une des revendications 4 à 6, dans lequel lesdites moyens de traitement (TRT) sont prévus pour changer de phase en fonction dudit statut.

9. Système selon l'une des revendications précédentes comportant une autre interface pour permettre l'ajout de nouveaux modèles au sein de ladite mémoire.

10. Procédé d'aide à la conduite d'une session de brainstorming entre une pluralité de participants connectés au moyen de terminaux (T1, T2, T3) à un réseau de communication (N), ledit procédé consistant à recevoir des données (e) transmises par lesdits terminaux en liaison avec ladite session, à traiter lesdites données pour conduire ladite session et à émettre d'autres données (s) vers lesdits terminaux, **caractérisé en ce qu'**il consiste en outre à
• sélectionner un modèle choisi parmi un ensemble de modèles disponibles au sein d'une mémoire ;
• utiliser un comportement défini par ledit modèle choisi pour traiter lesdites données (e), ledit comportement comportant au moins une étape de pilotage des modes de communication entre lesdits terminaux par la transmission de messages de signalisation (sig) à un ou plusieurs éléments gestionnaires dudit réseau de communication.

11. Programme d'ordinateur disposant de moyens mettant en oeuvre le procédé selon la revendication précédente.

12. Serveur de communication disposant des moyens matériels et logiciels pour mettre en oeuvre un système (S) d'aide à la conduite d'une session de brainstorming selon l'une des revendications 1 à 9.
